# EUROPÄISCHE PATENTSCHRIFT

(11) **EP 1 259 417 B1**
(45) Veröffentlichungstag und Bekanntmachung des Hinweises auf die Patenterteilung: **03.05.2006**
(21) Anmeldenummer: 01919148.5
(22) Anmeldetag: 19.02.2001
(51) Int. Cl.: B62K 5/02, B62J 17/00, B62K 3/00

(54) **MIT MUSKELKRAFT BETRIEBENES DREIRAD**
MUSCLE-POWERED TRICYCLE
TRICYCLE ENTRAINE PAR LA FORCE MUSCULAIRE

(30) Priorität: 17.02.2000 DE 10008322
(43) Veröffentlichungstag der Anmeldung: 27.11.2002
(73) Patentinhaber: Velotaxi GmbH Berlin, 10405 Berlin (DE)
(72) Erfinder: MATUSZEWSKI, Ludger, 10405 Berlin (DE); LANGE, Olaf, 16341 Zepernick (DE); IMMIG, Jens, 12161 Berlin (DE)
(74) Vertreter: Müller, Wolfram Hubertus
(86) Internationale Anmeldenummer: PCT/DE2001/000699
(87) Internationale Veröffentlichungsnummer: WO 2001/060685

(56) Entgegenhaltungen:
- DE-A- 4 400 775
- FR-A- 2 474 430
- FR-A- 2 499 015
- US-A- 3 709 553

## Beschreibung

Die Erfindung betrifft ein mit Muskelkraft betriebenes Dreirad gemäß dem Oberbegriff des Anspruchs 1.

Es sind mit Muskelkraft betriebene Dreiräder zur Beförderung von Personen bekannt, bei denen hinter einem auf einem üblichen Fahrradsitz sitzenden Fahrer ein Sitzbereich zur Aufnahme von ein oder zwei Personen vorgesehen ist. Derartige Dreiräder werden üblicherweise als Fahrradrikschas oder Fahrradtaxis bezeichnet. Dabei ist es bekannt, den Sitzbereich der Fahrgäste und den Sitz des Fahrers zum Schutz vor Regen, Wind und Kälte und zur Schaffung eines persönlichen Raumes für den Fahrgast mit einer Überdachung z.B. aus starrem Material, wie z.B. Holz zu versehen.

Nachteilig an den im Stand der Technik bekannten Dreirädern zur Personenbeförderung ist, daß die verwendeten Materialen schwer zu verarbeiten und bei Unfällen zu bleibenden Schäden am Fahrzeug führen.

Ein Dreirad mit den Merkmalen des Oberbegriffs des 1 Anspruchs ist bekannt aus DE 29710417U.

Der Erfindung liegt die Aufgabe zugrunde, ein durch Muskelkraft betriebenes Dreirad zur Verfügung zu stellen, dass sich durch ein hohes Maß an Kompaktheit und durch eine schützende Struktur auszeichnet, die neben den Fahrgästen auch den Fahrer schützt. Diese Struktur soll leicht verarbeitbar, robust und billig sein.

Diese Aufgabe wird erfindungsgemäß durch ein Dreirad mit den Merkmalen des Anspruchs 1 gelöst. Bevorzugte und vorteilhafte Ausgestaltungen der Erfindung sind in den Unteransprüchen angegeben.

Die erfindungsgemäße Lösung zeichnet sich durch eine im wesentlichen geschlossene Kabine aus, die sowohl den Fahrer als auch den Fahrgast umgibt. Hierdurch wird eine kompakte und sichere Einheit geschaffen, die Fahrer und Fahrgast gegen schlechte Witterung schützt und ausreichend Sicherheit gegenüber den Gefahren des Straßenverkehrs gewährleistet. Die erfindungsgemäß ausgebildete Kabine besteht aus Polyethylen. Die Verwendung dieses umweltfreundlichen und vollständig recyclebaren Kunststoffes für eine Kabine eines Fahrradtaxis stellt ein neues Verwendungsgebiet dieses Kunststoffes dar. Polyethylen ist elastisch, was für die Fahrsicherheit von Vorteil ist. Darüber hinaus ist dieser Kunststoff durch die Wahl der Granulatzusammensetzung einfach einzufärben, er benötigt keine weitere Oberflächenbehandlung, er ist wetterbeständig und es ist möglich, Werbematerial, beispielsweise mit Webematerial versehene Folien, direkt in das Kunststoffmaterial zu integrieren.

Es wird darauf hingewiesen, dass unter einer im wesentlichen geschlossenen Kabine eine Kabine verstanden wird, deren strukturgebende Teile einen geschlossenen Raum zwischen sich definieren. Dabei ist es durchaus möglich und vorgesehen, dass die geschlossene Kabine offene Flächen, etwa an den Seiten und im oberen Bereich, aufweist.

In einer bevorzugten Ausgestaltung der Erfindung weist die Kabine des Dreirades Mittel zur Aufnahme flächiger Elemente auf, die insbesondere als Werbeträger oder als Witterungsschutz dienen können. Bevorzugt sind diese flächigen Elemente in dafür vorgesehene, einstückig angeformte, Nuten an der Kabine schiebbar. Die flächigen Elemente können dort fixiert, insbesondere verschraubt, werden. Die Werbeträger stellen neben ihrer Werbeträgerfunktion bevorzugt Elemente des Kabinenaufbaus dar und sind hierzu zwischen strukturgebenden Verstrebungen der Kabine angeordnet.

Andere Aufnahmemittel für die flächigen Elemente wie Rast- oder Klemmvorrichtungen liegen ebenfalls im Rahmen der Erfindung. Durch die Möglichkeit einer einfachen Anbringung der flächigen Elemente bzw. Werbeträger an der Kabine können diese für ein Wechseln des Werbemotives oder aus Designgründen (Verwendung einer anderen Farbe) schnell und einfach ausgetauscht werden. Bei den Elementen handelt es sich bevorzugt um Plexiglasscheiben oder andere Kunststoffflächen, die mit Werbung versehen sind. Auch ein möglicher Witterungsschutz kann aus flächigem Kunsstoff, insbesondere transparentem Kunststoff bestehen.

Die Kabine ist vorzugsweise dergestalt geformt, dass im hinteren Bereich die Sitzfläche für die Fahrgäste mit der Kabine einstückig ausgebildet ist. Durch die einstückige Ausbildung wird das Verletzungsrisiko der Fahrgäste an hervorstehenden Teilen minimiert und es lässt sich so ein gewisses Informationsreservat für die Fahrgäste gegenüber der Außenwelt schaffen. Weiterhin lassen sich weitere Teile des Fahrgastbereiches einstückig ausbilden wie z.B. seitliche Armlehnen für die Fahrgäste.

Mit Vorteil ist an der Kabine mindestens eine Struktur zur Aufnahme von Fahrzeugteilen, insbesondere eines Laufkanals für ein Antriebselement, einer Fahrradkette und / oder Hinterrädern einstückig angeformt. Die einstückige Ausbildung erlaubt eine einfache Herstellung und leichte Reinigung der Kabine.

In einer bevorzugten Ausgestaltung des Dreirads werden Verbindungselemente, insbesondere zur Befestigung der Kabine auf dem Fahrgestell, in die Kabine einstückig mit eingearbeitet. Weitere verbindungselemente betreffen z.B. die Befestigung von Außenspiegeln, Regenschutz oder einer Trennwand zwischen Fahrgastraum und Fahrer.

In einer bevorzugten Ausgestaltung des Dreirades weist dieses einen Fahrersitz auf, der z.B. als Schalensitz in der Kabine einstückig integriert ist. Die Integration in die Kabine ist unter Stabilitäts- und Gewichtsaspekten positiv zu bewerten.

In einer weiteren bevorzugten Ausgestaltung ist auch das Fahrgestell aus Polyethylen ausgeführt, was wiederum unter Gewichtsaspekten positiv bewertet wird. In einer Weiterführung ist das Fahrgestell einstückig mit der Kabine ausgebildet. Alle Anschlüsse z.B. für Radaufhängung, Antrieb, Getriebe und Lenkung sind an der Kabine, insbesondere in das Unterteil der zweiteiligen Polyethylen-Kabine mit eingegossen und einstückig integriert.

Die Kabine des Dreirades weist in einer vorteilhaften Weiterbildung der Erfindung mehrere vorgefertigte Einzelteile, die zur Gesamtkabine zusammensetzbar sind, auf. Vorteilhafterweise sind zwei Einzelteile vorgesehen, nämlich ein Unterteil, insbesondere ein mit dem Fahrgestell verbundenes oder das Fahrgestell ausbildendes Unterteil, und ein oberes Abdeckteil. Diese sind über rastbare Verbindungselemente, wie z.B. einstückig angeformte, einsteckbare Verbindungselemente miteinander verbunden.

Eine weitere vorteilhafte Ausgestaltung der Kabine ist in der senkrechten Projektion trapezförmig und weist zwei in Längsrichtung (d.h. Fahrtrichtung) verlaufende, nach vorne zusammenlaufende Seitenstreben auf, die durch mindestens eine Querstrebe miteinander verbunden sind. In den Seitenstreben verlaufen vorteilhafterweise Längsnuten, in die z.B. flächigen Elemente, insbesondere Werbeträger einleg- oder einschiebbar und verschraubbar bzw. herausnehmbar sind.

Entsprechende Nuten sind auch im hinteren Bereich des Unterteils vorgesehen, so dass die Werbeträger sich durchgehend von der Rückseite nach oben und vorne erstrecken können.

Bevorzugt ist das Abdeckteil der Kabine für Fahrer und Fahrgast gewölbt, so dass Fahrer und Fahrgast problemlos einsteigen können.

Die Einzelteile der Kabine sind in einer vorteilhaften Ausprägung als Hohlelemente ausgebildet. Diese könne für sich selbst genommen schwimmtauglich sein. Diese Ausprägung stellt auf ein günstiges Volumen - Wanddicken Verhältnis ab. Durch die Ausprägung der Teile der Kabine als Hohlelemente wird eine hohe Stabilität und Verwindungssteife bei geringem Gewicht erreicht, was bei einem muskelbetriebenen Dreirad einen wesentlichen Wettbewerbsfaktor darstellt. Weiterhin wird die passive Fahrzeugsicherheit durch die doppelte Wandung erhöht und es lässt sich hierdurch eine selbsttragende Konstruktion der Kabine mit integriertem Fahrgestell verwirklichen.

Durch die Herstellung der Kabine aus im Rotationsschmelzverfahren geschleudertem Polyethylen können die Wandstärken zuverlässig eingestellt werden und daher eine gleichbleibende gute Qualität gewährleistet werden.

In einer weiteren vorteilhaften Ausprägung des Dreirads ist an der Kabine, insbesondere in den Hohlelementen eine Beleuchtungseinrichtung angeordnet. Die Kabine oder das Hohlelement kann von innen beleuchtet werden, um auch bei Dunkelheit z.B. als Werbeträger sichtbar zu sein. Ein weiterer Effekt ist die erhöhte passive Sicherheit, denn die Dreiräder werden so in der Dunkelheit leichter von anderen Verkehrsteilnehmern gesehen.

Die Erfindung wird nachfolgend unter Bezugnahme auf die Figuren der Zeichnung anhand eines Ausführungsbeispiels näher erläutert. Es zeigen:
- Fig. 1a: - eine Seitenansicht eines erfindungsgemäßen, mit Muskelkraft betriebenen Dreirades
- Fig. 1b: - eine Draufsicht auf das Dreirad der Fig. 1a
- Fig. 1c: - eine Rückansicht des Dreirades der Fig. 1a und
- Fig. 2: - eine aus zwei Teilen bestehende Fahrzeugkabine eines erfindungsgemäßen Dreirades.

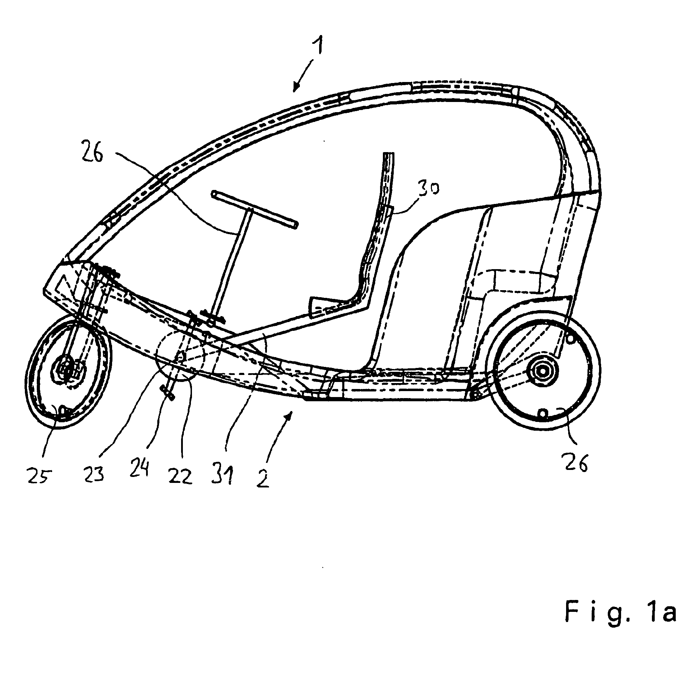

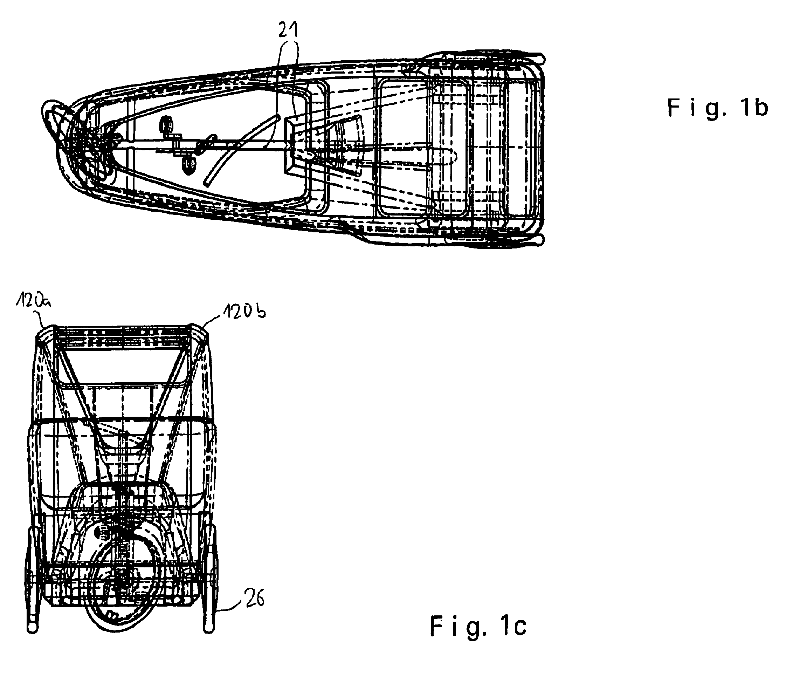

Die Figuren 1a bis 1c zeigen ein erfindungsgemäßes, mit Muskelkraft betriebenes Dreirad zur Beförderung von Personen. Das Dreirad weist als wesentliche strukturelle Elemente ein Fahrgestell 2 und eine geschlossene Kabine 1 auf.

Alternativ ist es ebenfalls möglich, Seitenwände mit Türen vorzusehen. Ebenfalls können an der Seite wahlweise transparente Regenvorhänge ein- und ausgerollt werden. Diese sind mit Druckknöpfen an der Kabine anbringbar.

Das Fahrgestell besteht in an sich bekannter Weise aus einem Metall- oder Aluminiumrahmen 21, in den ein Kettenantrieb mit Kettenrädern 22, Tretlager 23 und Pedalen 24 sowie das Vorderrad 25 und die beiden Hinterräder 26 integriert sind. Ein mit dem Vorderrad 25 gekoppelter Lenker 26 dient der Lenkung des Dreirades. Derartige Anordnungen sind dem Fachmann bekannt und bedürfen keiner näheren Erläuterung.

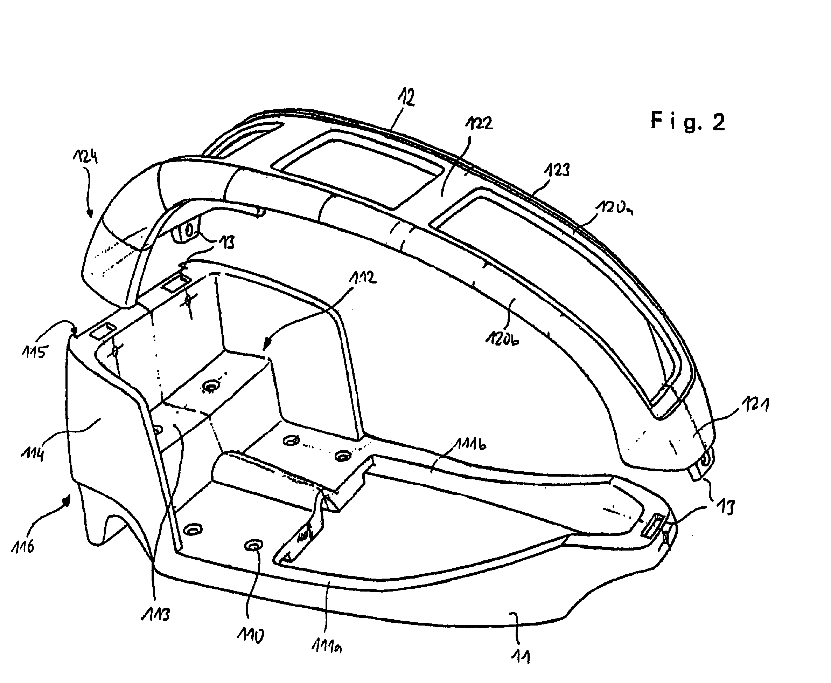

Der Kabinenbereich 1 zeichnet sich zunächst dadurch aus, dass die Kabine nicht nur die zu befördernden Personen, sondern auch den Fahrer selbst umgibt. Gemäß der Ausführungsform der Fig. 2 besteht sie aus einem Unterteil 11 und einem Abdeckteil 12, die über rastende Verbindungen 13 in einfacher Weise miteinander verbindbar sind.

Das Unterteil 11 weist Öffnungen 110 für eine Verschraubung mit dem Fahrgestell auf (Kiss-offs). Es besteht aus zwei seitlichen Streben 111a, 111b, die im vorderen Bereich zusammenlaufen und dem hinteren Bereich zwischen sich einen Sitzbereich 112 ausbilden. Der Sitzbereich 112 weist eine Sitzfläche 113 für die Fahrgäste und seitliche Schutzelemente 114 auf. Das Unterteil ist ebenso wie das Oberteil bevorzugt einteilig ausgeführt, wie noch im einzelnen beschrieben werden wird.

Alternativ ist das Unterteil 11 mit dem Fahrgestell einstükkig ausgebildet.

Auf der Rückseite des Unterteils sind Nuten 115 ausgebildet, in denen flächige, bevorzugt rechteckige oder trapezförmige Elemente, insbesondere Plexiglasscheiben oder andere Kunststoffflächen, einschiebbar sind. Die Plexiglasscheiben dienen als Werbeträger und sind bevorzugt mit Werbung bedruckt. Durch das Einschieben in die Nuten 115 können sie in einfacher Weise an der Kabine befestigt und nach Belieben ausgetauscht werden.

Das Oberteil 12 ist gewölbt ausgebildet und weist zwei seitliche, in Längsrichtung verlaufende Seitenstreben 120a, 120b auf, die nach vorne zu einem Frontteil 121 zusammenlaufen. Die Seitenstreben 120a, 120b sind durch Querstreben 122 miteinander verbunden. Auch in den Längsstreben 120a, 120b des Abdeckteils sind Nuten 123 ausgebildet, so dass rechteckige oder trapezförmige Werbeträger eingeschoben werden können. Das Oberteil kann damit in einfacher Weise als Werbefläche dienen.

Der rückseitige Bereich 124 des Abdeckteils geht stetig in den rückseitigen Bereich des Unterteils über. Die jeweiligen Nuten von Unterteil und Abdeckteil grenzen stetig aneinander an, so dass sich ein durchgängiger Werbeträger vom Bodenbereich 116 der Rückseite des Bodenteils 11 über die Rückseite 124 des Abdeckteils bis in den vorderen bzw. oberen Bereich des Abdeckteils 12 erstrecken kann. Es wird damit eine glatte und großflächige, schnell austauschbare Werbefläche zur Verfügung gestellt.

Die einfache Entfernbarkeit der in das Abdeckteil einschiebbaren Werbefläche bringt als weiteren Vorteil mit sich, dass diese bei schönem Wetter auch entfernt und das Fahrradtaxi gewissermaßen als Cabriolet betrieben werden kann.

Neben der geschlossenen Kabine zeichnet sich das erfindungsgemäße Dreirad zur Beförderung von Personen durch eine neue Sitzanordnung aus. Der Sitz des Dreirades ist als Schalensitz 30 ausgebildet, der über ein in vertikaler Richtung federndes Metall- oder Aluminiumrohr 31 im Tretlagerbereich mit dem Fahrgestell des Dreirades verbunden ist. Das Verbindungsrohr 31 erstreckt sich ausgehend von seiner Verbindungsstelle mit dem Fahrgestell schräg nach hinten. Die Rückenlehne des Schalensitzes verläuft im wesentlichen vertikal.

Diese Sitzanordnung bewirkt, dass der Fahrer im wesentlichen nach vorne tritt. Bei einem üblichen Fahrrad erfolgt eine Tretbewegung dagegen nach unten. Ein Nachvornetreten ermöglicht einen effizienteren Muskeleinsatz, da die Oberschenkelmuskulatur verstärkt eingesetzt werden kann. Durch die Verwendung eines Schalensitzes ist es dem Fahrer des weiteren möglich, sich in seinem Rückenbereich abzustützen und hierdurch zusätzlich Muskelkraft zu aktivieren. Darüber hinaus handelt es sich um eine entspannte Sitzhaltung, die es dem Fahrer ermöglicht, in Ruhephasen, etwa bei Halten vor einer Ampel, sich schnell zu erholen.

Zur individuellen Einstellung des Sitzes ist dieser in Längsrichtung des Verbindungsrohres 31 verschiebbar und in der gewünschten Position an dem Verbindungsrohr 31 arretierbar (nicht dargestellt).

Zur Bildung eines Informationsreservats des Fahrgastes ist innerhalb der Kabine ein vertikal verlaufendes, flächiges Trennelement zwischen Fahrer und Fahrgast angeordnet (nicht dargestellt). Dabei handelt es sich beispielsweise um eine punktuell am Abdeckteil 12 und am Unterteil 11 befestigte Plexiglasscheibe mit Sichtteil zur Kommunikation mit dem Fahrer. Alternativ wird in dezenter Weise ein gazeartiges Netz zwischen Fahrer und Fahrgast angebracht. Die Plexiglasscheibe bzw. das gazeartige Netz können ebenfalls als Werbeträger dienen.

Es wird darauf hingewiesen, dass die erfindungsgemäße Dreiradkabine, die sowohl den Fahrer als auch den oder die Fahrgäste umschließt, auch einteilig oder aus mehr als zwei Teilen ausgebildet werden kann. Die Ausgestaltung der Kabine aus zwei Teilen gemäß Fig. 2 ist nur beispielhaft zu verstehen. Weiter wird darauf hingewiesen, dass die Kabine bevorzugt keine Türen aufweist, so dass ein seitliches Einsteigen problemlos möglich ist.

Die Kabine besteht aus dem umweltfreundlichen Kunststoff Polyethylen. Die einzelnen Elemente der Kabine werden dabei wie folgt hergestellt. Zunächst wird eine positive Form des herzustellenden Elementes der Kabine (oder der Gesamtkabine, sofern diese nicht aus vorgefertigten Einzelteilen zusammengesetzt ist) gebaut. Hieraus wird dann eine etwa aus Aluminium bestehende negative Form gebildet. Hierzu wird auf die an sich bekannten Verfahren der Gießtechnik verwiesen. In die negative Form wird ein aus Polyethylen bestehendes Granulat eingestreut und die negative Form mit dem Granulat anschließend in einem Ofen erhitzt. Während des Erhitzungsvorgangs wird die Negativform bevorzugt gedreht, um eine homogene Verteilung des Polyethylens zu gewährleisten. Nach Abkühlen der Negativform wird diese entfernt und das fertige Element entnommen.

Dabei werden in der Negativform vor Einbringen des Granulates bevorzugt mit Werbung versehene Strukturen wie etwa eine mit Werbung bedruckte oder beschichtete Folie eingebracht. Derartige, mit Werbung versehene Strukturen bestehen bevorzugt ebenfalls aus Polyethylen. Die Werbeinformation der Strukturen bleibt bei dem Erhitzungs- und Schmelzvorgang erhalten, so dass die Werbung direkt in das Kunststoffmaterial integriert ist.

Die Erfindung beschränkt sich in ihrer Ausführung nicht auf die vorstehend dargestellten Ausführungsbeispiele. Wesentlich für die Erfindung ist allein, dass ein manuell betriebenes Dreirad eine Polyethylen-Kabine aufweist.

## Patentansprüche

1. Mit Muskelkraft betriebenes Dreirad mit einem Fahrgestell und einer mit dem Fahrgestell verbundenen und aus Polyethylen bestehenden Kabine, bei dem die Kabine (1) im Wesentlichen geschlossen ausgebildet ist,
**dadurch gekennzeichnet,**
**dass** die Kabine (1) ein Unterteil (11) und ein oberes Abdeckteil (12) aufweist, das gewölbt ausgebildet ist und zwei in Längsrichtung verlaufende Seitenstreben (120a, 120b) aufweist, die zu einem mit dem Unterteil (11) verbindbaren Frontteil (121) nach vorne zusammenlaufen.

2. Dreirad nach Anspruch 1, **dadurch gekennzeichnet, dass** an der aus Polyethylen bestehenden Kabine Mittel (123, 115) zur Aufnahme flächiger Elemente, insbesondere eines Werbeträgers und/oder eines Witterungsschutzes angeformt sind.

3. Dreirad nach Anspruch 2, **gekennzeichnet durch** an der Kabine angeformte Nuten (123, 115), in die flächige Elemente, insbesondere Werbeträger und/oder ein Witterungsschutz einschiebbar sind.

4. Dreirad nach mindestens einem der vorangegangenen Ansprüche, **dadurch gekennzeichnet, dass** die hintere Sitzfläche, insbesondere auch Armlehnen für zu befördernde Fahrgäste einstückig ausgebildet sind.

5. Dreirad nach mindestens einem der vorangegangenen Ansprüche, **dadurch gekennzeichnet, dass** an der Kabine mindestens eine Struktur zur Aufnahme von Fahrzeugteilen, insbesondere eines Laufkanals für ein Antriebselement, einer Fahrradkette und/oder Hinterrädern einstückig angeformt ist.

6. Dreirad nach mindestens einem der vorangehenden Ansprüche, **dadurch gekennzeichnet, dass** an der Kabine Verbindungselemente, insbesondere zur Verbindung der Kabine mit dem Fahrzeuggestell, mit Seitenspiegeln, mit einem Regenschutz und/oder einer Trennwand zwischen Fahrgastraum und Fahrer einstückig ausgebildet sind.

7. Dreirad nach mindestens einem der vorangehenden Ansprüche, **dadurch gekennzeichnet, dass** der Fahrersitz an der Kabine einstückig ausgebildet ist.

8. Dreirad nach mindestens einem der vorangehenden Ansprüche, **dadurch gekennzeichnet, dass** auch das Fahrzeuggestell aus Polyethylen besteht.

9. Dreirad nach Anspruch 7, **dadurch gekennzeichnet, dass** das Fahrzeuggestell einstückig mit der Kabine ausgebildet ist.

10. Dreirad nach mindestens einem der vorangehenden Ansprüche, **dadurch gekennzeichnet, dass** das Unterteil (11) mit dem Fahrzeuggestell verbunden ist.

11. Dreirad nach mindestens einem der vorangegangenen Ansprüche, **dadurch gekennzeichnet, dass** das Unterteil (11) und das Abdeckteil (12) über rastbare Verbindungen (13) miteinander verbindbar sind.

12. Dreirad nach mindestens einem der vorangegangenen Ansprüche, **dadurch gekennzeichnet, dass** das Abdeckteil (12) in horizontaler Projektion im wesentlichen trapezförmig ausgebildet ist und hierzu zwei in Längsrichtung verlaufende, nach vorne zusammenlaufende Seitenstreben (120a, 120b) aufweist, die durch mindestens eine Querstrebe (122) miteinander verbunden sind.

13. Dreirad nach Anspruch 12, **dadurch gekennzeichnet, dass** die in Längsrichtung verlaufenden Seitenstreben (120a, 120b) des Abdeckteils (12) Nuten (123) zum Einschieben von flächigen Elementen aufweisen.

14. Dreirad nach mindestens einem der vorangehenden Ansprüche, **dadurch gekennzeichnet, dass** die Kabine als Hohlelement ausgebildet bzw. aus Einzelteilen zusammengesetzt ist, die als Hohlelemente ausgebildet sind.

15. Dreirad nach mindestens einem der vorangehenden Ansprüche, **dadurch gekennzeichnet, dass** die Kabine schwimmfähig ausgebildet ist.

16. Dreirad nach mindestens einem der vorangehenden Ansprüche, **dadurch gekennzeichnet, dass** die Kabine aus im Rotationsschmelzverfahren geschleuderten Polyethylen besteht.

17. Dreirad nach mindestens einem der vorangegangenen Ansprüche, **dadurch gekennzeichnet, dass** an der Kabine, insbesondere in einem Hohlelement eine Beleuchtungseinrichtung angeordnet ist.

18. Dreirad nach mindestens einem der vorangegangenen Ansprüche, **dadurch gekennzeichnet, dass** das Dreirad einen vorderen Sitz (30) für einen Fahrer und eine hintere Sitzfläche (113) für zu befördernde Fahrgäste aufweist.

## Claims

1. Muscle-powered tricycle with a chassis and a cabin which is connected to the chassis and is composed of polyethylene, in which the cabin (1) is formed in an essentially closed manner, **characterized in that** the cabin (1) has a lower part (11) and an upper covering part (12) which is formed in a curved manner and has two side struts (120a, 120b) which run in the longitudinal direction and converge to the front to form a front part (121) which can be connected to the lower part (11).

2. Tricycle according to Claim 1, **characterized in that** means (123, 115) for receiving sheet-like elements in particular an advertising carrier and/or a weather protector, are moulded onto the cabin composed of polyethylene.

3. Tricycle according to Claim 2, **characterized by** grooves (123, 115) which are moulded onto the cabin and into which sheet-like elements, in particular advertising carriers and/or a weather protector, can be pushed.

4. Tricycle according to at least one of the preceding claims, **characterized in that** the rear seat surface in particular also armrests, for passengers who are to be conveyed are integrally formed.

5. Tricycle according to at least one of the preceding claims, **characterized in that** at least one structure for receiving vehicle parts, in particular a running channel for a driving element, a bicycle chain and/or rear wheels is integrally moulded onto the cabin.

6. Tricycle according to at least one of the preceding claims, **characterized in that** connecting elements, in particular for connecting the cabin to the chassis, to side mirrors, to a rain protector and/or a dividing wall between passenger compartment and driver, are integrally formed on the cabin.

7. Tricycle according to at least one of the preceding claims, **characterized in that** the driver's seat is integrally formed on the cabin.

8. Tricycle according to at least one of the preceding claims, cha.racterized in that the vehicle chassis is also composed of polyethylene.

9. Tricycle according to Claim 7, **characterized in that** the vehicle chassis is integrally formed with the cabin.

10. Tricycle according to at least one of the preceding claims, **characterized in that** the lower part (11) is connected to the vehicle chassis.

11. Tricycle according to at least one of the preceding claims, **characterized in that** the lower part (11) and the covering part (12) can be connected to each other via latchable connections (13).

12. Tricycle according to at least one of the preceding claims, **characterized in that** the covering part (12) is formed essentially trapezoidally in horizontal projection and to this end has two side struts (120a, 120b) which run in the longitudinal direction, converge towards the front and are connected to each other by means of at least one transverse strut (122).

13. Tricycle according to Claim 12, **characterized in that** the side struts (120a, 120b), which run in the longitudinal direction, of the covering part (12) have grooves (123) for pushing sheet-like elements into.

14. Tricycle according to at least one of the preceding claims, **characterized in that** the cabin is formed as a hollow element or is composed of individual parts which are formed as hollow elements.

15. Tricycle according to at least one of the preceding claims, **characterized in that** the cabin is formed in a manner such that it is capable of floating.

16. Tricycle according to at least one of the preceding claims, **characterized in that** the cabin is composed of polyethylene centrifugally moulded by rotational moulding.

17. Tricycle according to at least one of the preceding claims, **characterized in that** a lighting device is arranged on the cabin, in particular in a hollow element.

18. Tricycle according to at least one of the preceding claims, **characterized in that** the tricycle has a front seat (30) for a driver and a rear seat surface (113) for passengers who are to be conveyed.

## Revendications

1. Tricycle entraîné par la force musculaire, comprenant un châssis et une cabine connectée au châssis et constituée de polyéthylène, la cabine (1) étant essentiellement fermée,
**caractérisé en ce que**
la cabine (1) présente une partie inférieure (11) et une partie de recouvrement supérieure (12) qui est réalisée sous forme courbe et qui présente deux montants latéraux (120a, 120b) s'étendant dans la direction longitudinale, qui se réunissent vers l'avant pour former une partie avant (121) pouvant être connectée à la partie inférieure (11).

2. Tricycle selon la revendication 1, **caractérisé en ce que** des moyens (123, 115) pour recevoir des éléments plats, notamment un support publicitaire et/ou une protection contre les intempéries, sont formés sur la cabine constituée de polyéthylène.

3. Tricycle selon la revendication 2, **caractérisé par** des rainures (123, 115) façonnées sur la cabine, dans lesquelles des éléments plats, notamment des supports publicitaires et/ou une protection contre les intempéries peuvent être insérés.

4. Tricycle selon au moins l'une quelconque des revendications précédentes, **caractérisé en ce que** la surface de siège arrière, notamment également des accoudoirs, pour des passagers à transporter sont réalisés d'une seule pièce.

5. Tricycle selon au moins l'une quelconque des revendications précédentes, **caractérisé en ce qu'**au moins une structure pour recevoir des pièces de véhicule, notamment un canal de roulement pour un élément d'entraînement, une chaîne de vélo et/ou des roues arrière est formée d'une seule pièce sur la cabine.

6. Tricycle selon au moins l'une quelconque des revendications précédentes, **caractérisé en ce que** des éléments de connexion, notamment pour connecter la cabine au châssis du véhicule, à des rétroviseurs, à une protection contre la pluie et/ou à une paroi de séparation entre l'habitacle des passagers et le conducteur sont réalisés d'une seule pièce sur la cabine.

7. Tricycle selon au moins l'une quelconque des revendications précédentes, **caractérisé en ce que** le siège du conducteur est réalisé d'une seule pièce sur la cabine.

8. Tricycle selon au moins l'une quelconque des revendications précédentes, **caractérisé en ce que** le châssis du véhicule est également constitué de polyéthylène.

9. Tricycle selon la revendication 7, **caractérisé en ce que** le châssis du véhicule est réalisé d'une seule pièce avec la cabine.

10. Tricycle selon au moins l'une quelconque des revendications précédentes, **caractérisé en ce que** la partie inférieure (11) est connectée au châssis du véhicule.

11. Tricycle selon au moins l'une quelconque des revendications précédentes, **caractérisé en ce que** la partie inférieure (11) et la partie de recouvrement (12) peuvent être connectées l'une à l'autre par le biais de connexions encliquetables (13).

12. Tricycle selon au moins l'une quelconque des revendications précédentes, **caractérisé en ce que** la partie de recouvrement (12) est réalisé essentiellement en forme de trapèze en projection horizontale, et présente à cet effet deux montants latéraux (120a, 120b) s'étendant dans la direction longitudinale, qui se réunissent vers l'avant et qui sont connectés l'un à l'autre par au moins une traverse (122).

13. Tricycle selon la revendication 12, **caractérisé en ce que** les montants latéraux (120a, 120b) de la partie de recouvrement (12), s'étendant dans la direction longitudinale, présentent des rainures (123) pour l'insertion d'éléments plats.

14. Tricycle selon au moins l'une quelconque des revendications précédentes, **caractérisé en ce que** la cabine est réalisée sous la forme d'un élément creux ou est assemblée à partir de pièces individuelles qui sont réalisées sous forme d'éléments creux.

15. Tricycle selon au moins l'une quelconque des revendications précédentes, **caractérisé en ce que** la cabine est réalisée de manière flottante.

16. Tricycle selon au moins l'une quelconque des revendications précédentes, **caractérisé en ce que** la cabine se compose de polyéthylène produit par centrifugation dans un procédé de fusion en rotation.

17. Tricycle selon au moins l'une quelconque des revendications précédentes, **caractérisé en ce qu'**un dispositif d'éclairage est disposé sur la cabine, notamment dans un élément creux.

18. Tricycle selon au moins l'une quelconque des revendications précédentes, **caractérisé en ce que** le tricycle présente un siège avant (30) pour un conducteur et une surface de siège arrière (113) pour des passagers à transporter.
